# EUROPEAN PATENT APPLICATION

(11) **EP 4 681 679 A1**
(43) Date of publication of application: **21.01.2026**
(21) Application number: 25186515.0
(22) Date of filing: 01.07.2025
(51) Int. Cl.: A61C 15/04

(54) **MONOFILAMENT DENTAL TAPES, DENTAL FLOSS ROLLS AND DENTAL FLOSS STICKS**

(30) Priority: 19.07.2024 CN 202421724630 U
(71) Applicant: Celanese Xingda Filaments Co., Ltd, Wuxi, Jiangsu 214183 (CN)
(72) Inventor: FU, Chengjie, Shanghai, 201210 (CN); XIA, Jingbing, Wuxi, 214183 (CN)
(74) Representative: Jeck, Jonathan

(57) **Abstract**

The present application discloses a monofilament dental tape (1), characterized in that the monofilament dental tape (1) has an elongate strip shape extending along a first direction, and includes a wavy section (10) in a cross section along a second direction, the second direction being perpendicular to the first direction; the wavy section (10) includes a first wavy portion (100) and a second wavy portion (101); the first wavy portion (100) includes a plurality of wave units connected in sequence; the second wavy portion (101) includes one or more secondary wave units superimposed on each wave unit of the first wavy portion (100); the wavelength of each wave unit of the first wavy portion (100) is greater than the wavelength of each secondary wave unit of the second wavy portion (101); the amplitude of each wave unit of the first wavy portion (100) is greater than the amplitude of each secondary wave unit of the second wavy portion (101). The present application also discloses a dental floss roll formed by the monofilament dental tape and a dental floss stick formed by the monofilament dental tape.

## Description

### CROSS REFERENCE OF RELATED APPLICATION

This application claims priority to Chinese Patent Application 202421724630.9, filed July 19, 2024, the disclosure of which is incorporated herein by reference.

### TECHNICAL FIELD

The present application relates to the field of dental cleaning tools, and in particular to a monofilament dental tape, a dental floss roll consisting of the monofilament dental tape, and a dental floss stick consisting of the monofilament dental tape.

### BACKGROUND

Monofilament dental tape is a tool used to clean tooth gap. It removes food debris and dental plaque from the tooth gap through friction and translation. In order to slide smoothly into the tooth gap, the thickness of the monofilament dental tape must be thin enough. However, too thin a thickness will have a negative impact on the tensile strength of the monofilament dental tape, making the monofilament dental tape easy to break when tensioned. In order to effectively scrape off food debris and dental plaque attached to the surface of the teeth, the side of the monofilament dental tape that contacts the tooth surface should have an uneven structure. However, such a structure will in turn increase the thickness of the monofilament dental tape, making it difficult to slide into the tooth gap.

It is desirable to develop a monofilament dental tape that can be easily slid into the tooth gap, has a certain tensile strength, and has a structure that is conducive to effectively scraping off food debris and dental plaque attached to the tooth surface.

### SUMMARY OF THE INVENTION

In order to solve the above technical problems, the present application proposes a monofilament dental tape, characterized in that the monofilament dental tape has a elongate strip shape extending along a first direction, and includes a wavy section in a cross-section along a second direction, and the second direction is perpendicular to the first direction; the wavy section includes a first wavy portion and a second wavy portion; the first wavy portion includes a plurality of wave units connected in sequence; the second wavy portion includes one or more secondary wave units superimposed on each wave unit of the first wavy portion; the wavelength of each wave unit of the first wavy portion is greater than the wavelength of each secondary wave unit of the second wavy portion; the amplitude of each wave unit of the first wavy portion is greater than the amplitude of each secondary wave unit of the second wavy portion.

According to an optional embodiment, the monofilament dental tape includes one or two guide sections; the guide section is arranged at the edge of the wavy section; the guide section includes a connecting portion close to the wavy section and a guiding portion away from the wavy section; the guiding portion has a smoothly extending arc surface.

According to an optional embodiment, when the monofilament dental tape is not subjected to external force, the height of the wavy section is in the range of 40 to 200 µm, preferably in the range of 60 to 170 µm, more preferably in the range of 80 to 150 µm; when the monofilament dental tape is not subjected to external force, the width of the wavy section is in the range of 700 to 3000 µm, preferably in the range of 700 to 2000 µm, more preferably in the range of 1000 to 2000 µm. The width of the guide section is in the range of 50 to 550 µm.

According to an optional embodiment, the first wavy portion includes 2 to 25 wave units, preferably 5 to 10 wave units; the wavelength of each wave unit is in the range of 60 to 800 µm, preferably in the range of 100 to 600 µm, more preferably in the range of 150 to 500 µm; the amplitude of each wave unit is in the range of 0 to 90 µm, preferably in the range of 2 to 50 µm, more preferably in the range of 3 to 25 µm; the wavelength of each secondary wave unit is in the range of 20 to 600 µm, preferably in the range of 30 to 400 µm, more preferably in the range of 40 to 200 µm; the amplitude of each secondary wave unit is in the range of 0 to 50 µm, preferably in the range of 1 to 25 µm, more preferably in the range of 2 to 15 µm; the wavelength of each wave unit does not exceed 20 times, preferably does not exceed 10 times, more preferably does not exceed 4 times the wavelength of each secondary wave unit; and the travel direction of each secondary wave unit changes along the contour of the first wavy portion.

According to an optional embodiment, the thickness of the wavy section is uniform and is in the range of 20 to 120µm, preferably in the range of 30 to 90 µm, more preferably in the range of 40 to 80 µm.

According to an optional embodiment, the thickness of the wavy section is not uniform; the maximum value of the thickness of the wavy section does not exceed 6 times the minimum value, preferably does not exceed 2 times; the thickness of the wavy section is in the range of 20 to 120 µm, preferably in the range of 30 to 90 µm, more preferred in the range of 40 to 80 µm.

According to an optional embodiment, the first wavy portion is composed of wave units having one or more shapes of triangles, arcs, sinusoidal waves, rectangles and other polygons connected in sequence, and has a rounded profile at the turning portion; the second wavy portion is composed of secondary wave units having one or more shapes of triangles, arcs, sinusoidal waves, rectangles and other polygons, and has a rounded profile at the turning portion.

According to an optional embodiment, the monofilament dental tape is made of polyamide thermoplastic elastomer, polyetherester thermoplastic elastomer, polyolefin thermoplastic elastomer, thermoplastic polyurethane elastomer, styrene block copolymer elastomer, polyolefin with tensile modulus lower than 1 GPa or polybutylene succinate with tensile modulus lower than 1 GPa, preferably made of polyamide thermoplastic elastomer or polyetherester thermoplastic elastomer, more preferably made of polyetherester thermoplastic elastomer.

According to an optional embodiment, the monofilament dental tape includes a coating applied on its surface; the coating is made of lubricant, peeling agent, abrasive, whitening agent, active agent, olfactory stimulant, salivating agent, sensory stimulant, essential oil, fragrance, antibacterial agent or antiviral agent.

The present application also proposes a dental floss roll, which includes a dental floss roll housing, a dental floss reel fit in the dental floss roll housing, and the monofilament dental tape wound on the dental floss reel.

The present application also provides a dental floss stick, which includes a dental floss stick holder and the monofilament dental tape connected between different ends of the dental floss stick holder.

The monofilament dental tapes, dental floss rolls and dental floss sticks according to the present application have the following technical effects. Such a wavy structure of the monofilament dental tape along its width direction can increase the surface area and flexibility of the monofilament dental tape, thereby improving the cleaning efficiency and the ability to enter narrow interdental spaces. The optional guiding portion at the edge of the monofilament dental tape helps to guide the dental floss tape in the tooth gap and protect the gums from abrasion when flossing. The optional coating of the monofilament dental tape plays a lubricating, wear-resistant, whitening, antibacterial/antiviral or other therapeutic role during the use of dental floss. The wavy structure is combined with optimized size, material and potential coating to create a monofilament dental tape that can effectively clean interdental spaces, while the guiding portion facilitates insertion and prevents irritation of the gums during use.

### BRIEF DESCRIPTION OF THE DRAWINGS

The above and other aspects of the present application will be more fully understood from the detailed description below in conjunction with the following drawings. It should be noted that the scales of the drawings may be different for the purpose of clear description, but this will not affect the understanding of the present application.
FIG. 1 is a perspective view of a monofilament dental tape according to the present application.
FIG. 2 is a cross-sectional view of the monofilament dental tape of FIG. 1.
FIG. 3 is a partially enlarged schematic diagram of the wavy section of FIG. 2, showing one wave unit and a plurality of secondary wave units superimposed thereon.
FIG. 4 is a partial schematic diagram of a wavy section of a monofilament dental tape according to another embodiment of the present application, showing one wave unit and a plurality of secondary wave units superimposed thereon.
FIG. 5 is partial schematic diagram of a wavy section of a monofilament dental tape according to another embodiment of the present application, showing one wave unit and a plurality of secondary wave units superimposed thereon.
FIG. 6 is partial schematic diagram of a wavy section of a monofilament dental tape according to another embodiment of the present application, showing one wave unit and a plurality of secondary wave units superimposed thereon.
FIG. 7 is partial schematic diagram of a wavy section of a monofilament dental tape according to another embodiment of the present application, showing one wave unit and a plurality of secondary wave units superimposed thereon.
FIG. 8 is partial schematic diagram of a wavy section of a monofilament dental tape according to another embodiment of the present application, showing two wave units of the same shape and a plurality of secondary wave units superimposed thereon.
FIG. 9 is partial schematic diagram of a wavy section of a monofilament dental tape according to another embodiment of the present application, showing two wave units of different shapes and a plurality of secondary wave units superimposed thereon.

### DETAILED DESCRIPTION OF THE PREFERRED EMBODIMENTS

The exemplary embodiments of the present application will be described in more detail below with reference to the accompanying drawings. Although the exemplary embodiments of the present application are shown in the accompanying drawings, it should be understood that the present application can be implemented in various forms and should not be limited by the embodiments described herein. On the contrary, these embodiments are provided in order to enable a more thorough understanding of the present application and to fully convey the scope of the present application to those skilled in the art.

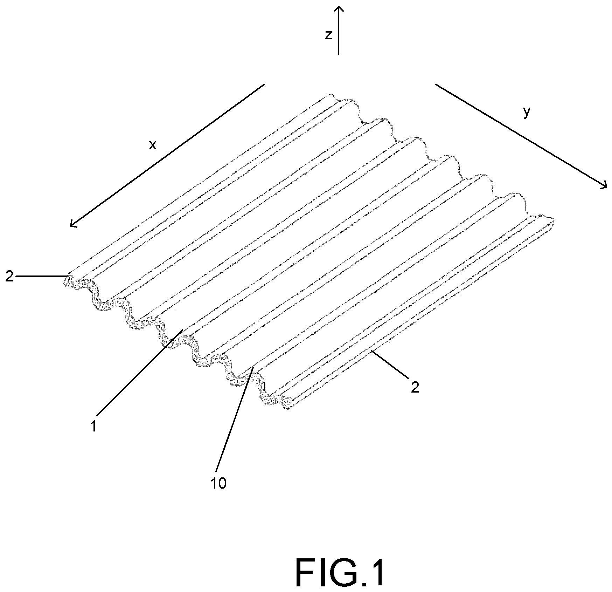

FIG. 1 is a perspective view of a monofilament dental tape according to a first embodiment of the present application. Herein, the extending direction of the monofilament dental tape 1 is defined as the length direction or the first direction (i.e., the arrow direction x in FIG. 1), the direction perpendicularly pointing from one side of the monofilament dental tape to the other side is defined as the width direction or the second direction (i.e., the arrow direction y in FIG. 1), and the direction orthogonal to the length direction and the width direction is defined as the height direction or the third direction (i.e., the arrow direction z in FIG. 1). The monofilament dental tape 1 has an elongate strip shape extending along the length direction x, and includes a wavy section 10 in a cross section along the width direction y. The monofilament dental tape 1 may further include guide sections 2 arranged at the edge of the wavy section 10.

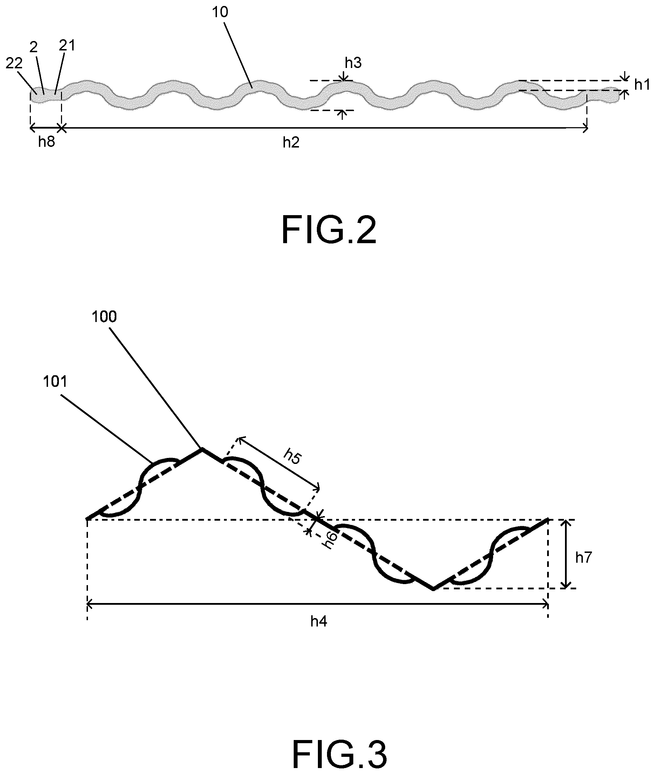

FIG. 2 is a cross-sectional view of the monofilament dental tape of FIG. 1. FIG. 3 is a partially enlarged schematic diagram of the wavy section of FIG. 2, showing a wave unit and a plurality of secondary wave units superimposed thereon. The wavy section 10 includes a first wavy portion 100 and a second wavy portion 101. The first wavy portion 100 includes 6 wave units connected in sequence. The shape of the wave unit is triangular. The second wavy portion 101 includes one or more secondary wave units superimposed on the wave unit of the first wavy portion 100. The shape of the secondary wave unit is a sinusoidal wave. Specifically, a secondary wave unit is superimposed on a quarter length of each wave unit of the first wavy portion 100 of the wavy section 10. The wavelength h₄ of each wave unit of the first wavy portion 100 is greater than the wavelength h₅ of each secondary wave unit of the second wavy portion 101. The amplitude h₇ of each wave unit of the first wavy portion 100 is greater than the amplitude h₆ of each secondary wave unit of the second wavy portion 101.

The guide section 2 is arranged at the edge of the wavy section 10 and includes a connecting portion 21 close to the wavy section 10 and a guiding portion 22 away from the wavy section 10. The width h₈ of the guide section 2 is about 120 µm. The guiding portion 22 has a smoothly extending arc-shaped surface.

In the embodiment of FIG. 1, the monofilament dental tape is made of 30 wt% Hytrel ^{®} 5556 (polyetherester thermoplastic elastomer), 65 wt% Hytrel ^{®} 4068FG (polyetherester thermoplastic elastomer) and 5 wt% Multibase ^{™} MB50-010 (lubricant masterbatch based on polyetherester thermoplastic elastomer).

When the monofilament dental tape 1 is not subjected to external force, the thickness h₁ of the wavy section 10 is 70 µm. The height h₃ of the wavy section 10 is 100 µm. The width h₂ of the wavy section 10 is 1600 µm.

The wavelength h₄ of the wave unit is about 260 µm, the amplitude h₇ is about 15 µm, and it has a rounded profile at the turning portion. The wavelength h₅ of the secondary wave unit is about 84 µm, and the amplitude h₆ is about 3 µm.

The wavy section 10 formed by superimposing the first wavy section 100 and the second wavy section 101 can increase the roughness and cleaning power of the monofilament dental tape without affecting the compressibility and the ability to enter the tooth gap of the monofilament dental tape. The wavelength h₄ and amplitude h₇ of the wave unit of the first wavy section 100 are relatively large, and constitute the basic structure of the wavy section 10 to give the monofilament dental tape good compressibility and the ability to enter the tooth gap. The wavelength h₅ and amplitude h₆ of the secondary wave unit of the second wavy section 101 are relatively small, and mainly play the role of increasing the roughness of the monofilament dental tape, which can improve the cleaning power of the monofilament dental tape.

It can be understood that in order to achieve the above technical effect, the traveling direction of the secondary wave unit of the second wavy portion 101 changes along the contour direction of the first wavy portion 100.

It is understood that in order to achieve the above technical effects, the thickness of the wavy section 10 can be uniform or non-uniform. In the latter case, the maximum value of the thickness of the wavy section 10 does not exceed 6 times the minimum value, preferably does not exceed 2 times. The thickness h₁ of the wavy section 10 can be in the range of 20 to 120 µm, preferably in the range of 30 to 90 µm, more preferably in the range of 40 to 80 µm. The width h₂ of the wavy section 10 may be in the range of 700 to 3000 µm, preferably in the range of 700 to 2000 µm, and more preferably in the range of 1000 to 2000 µm. The height h₃ of the wavy section 10 may be in the range of 40 to 200 µm, preferably in the range of 60 to 170 µm, more preferably in the range of 80 to 150 µm.

It can be understood that in order to achieve the above technical effects, the first wavy portion 100 of the wavy section 10 can have 2 to 25 wave units, preferably 5 to 10 wave units. The wavelength h₄ of the wave unit of the first wavy portion 100 of the wavy section 10 can be in the range of 60 to 800 µm, preferably in the range of 100 to 600 µm, and more preferably in the range of 150 to 500 µm. The amplitude h₇ of the wave unit of the first wavy portion 100 of the wavy section 10 may be in the range of 0 to 90 µm, preferably in the range of 2 to 50 µm, and more preferably in the range of 3 to 25 µm.

It can be understood that, in order to achieve the above technical effects, the wavelength h₅ of the secondary wave unit of the second wavy portion 101 of the wavy section 10 can be in the range of 20 to 600 µm, preferably in the range of 30 to 400 µm, and more preferably in the range of 40 to 200 µm. The amplitude h₆ of the secondary wave unit of the second wavy portion 101 of the wavy section 10 can be in the range of 0 to 50 µm, preferably in the range of 1 to 25 µm, and more preferably in the range of 2 to 15 µm.

It can be understood that in order to achieve the above technical effects, the wavelength h₄ of the wave unit of the first wavy portion 100 of the wavy section 10 shall not exceed 20 times the wavelength h₅ of the secondary wave unit of the second wavy portion 101 of the wavy section 10, preferably not more than 10 times, and more preferably not more than 4 times.

It can be understood that in order to achieve the above technical effects, the monofilament dental tape 1 can be made of polyamide thermoplastic elastomer, polyetherester thermoplastic elastomer, polyolefin thermoplastic elastomer, thermoplastic polyurethane elastomer, styrene block copolymer elastomer, polyolefin with tensile modulus lower than 1 GPa or polybutylene succinate with tensile modulus lower than 1 GPa. Preferably, the monofilament dental tape 1 can be made of polyamide thermoplastic elastomer or polyetherester thermoplastic elastomer. More preferably, the monofilament dental tape 1 can be made of polyetherester thermoplastic elastomer.

It is understood that, although not shown in the figures, the monofilament dental tape according to the present application may also include a coating applied on its surface. The coating may be made of the following substances: lubricants, stripping agents, abrasives, whitening agents, active agents, olfactory stimulants, salivating agents, sensory stimulants, essential oils, spices, antibacterial agents or antiviral agents.

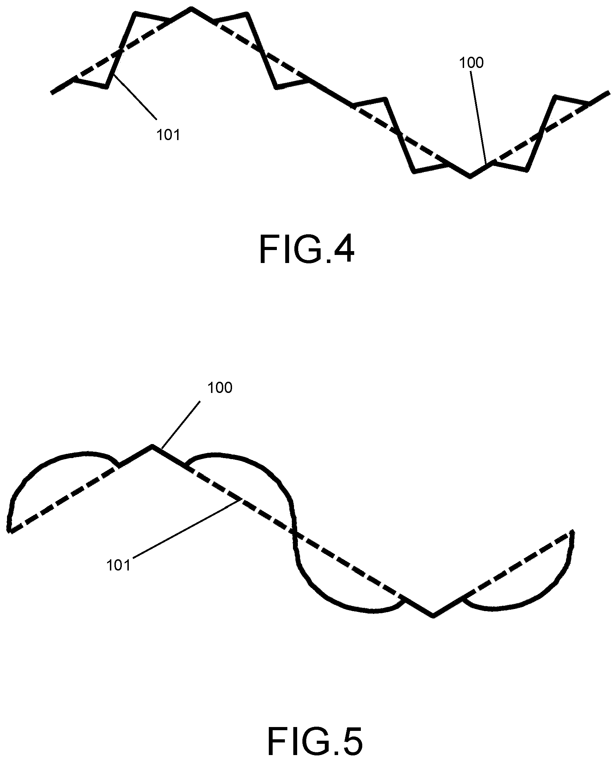

FIG. 4 is a partial schematic diagram of a wavy section 10 of a monofilament dental tape 1 according to another embodiment of the present application, showing one wave unit and a plurality of secondary wave units superimposed thereon. Compared with FIG. 3, the shape of the wave unit of the first wavy portion 100 in FIG. 4 is still triangular, while the shape of the secondary wave unit of the second wavy portion 101 also becomes triangular.

FIG. 5 is a partial schematic diagram of a wavy section 10 of a monofilament dental tape 1 according to another embodiment of the present application, showing one wave unit and a plurality of secondary wave units superimposed thereon. Compared with FIG. 3, the shape of the wave unit of the first wavy portion 100 in FIG. 5 is still triangular, while the shape of the secondary wave unit of the second wavy portion 101 becomes a sinusoidal wave.

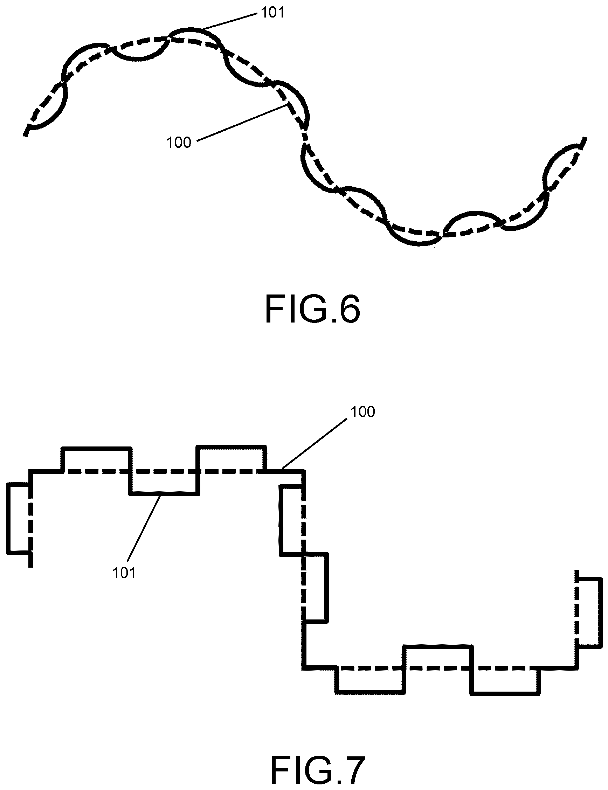

FIG. 6 is a partial schematic diagram of a wavy section 10 of a monofilament dental tape 1 according to another embodiment of the present application, showing one wave unit and a plurality of secondary wave units superimposed thereon. Compared with FIG. 3, the shape of the wave unit of the first wavy portion 100 in FIG. 6 becomes a sinusoidal wave, and the shape of the secondary wave unit of the second wavy portion 101 is still a sinusoidal wave, but three secondary wave units are superimposed in half the length of each wave unit of the first wavy portion 100 of the wavy section 10.

FIG. 7 is a partial schematic diagram of a wavy section 10 of a monofilament dental tape 1 according to another embodiment of the present application, showing one wave unit and a plurality of secondary wave units superimposed thereon. Compared with FIG. 3, the shape of the wave unit of the first wavy portion 100 in FIG. 7 becomes a rectangle, and the shape of the secondary wave unit of the second wavy portion 101 also becomes a rectangle.

It can be understood that in order to achieve the above-mentioned technical effects, the first wavy portion 100 of the wave unit having the above-mentioned shape (such as triangle, circular arc, sinusoidal wave, rectangle, other polygons, etc.) and the second wavy portion 101 of the secondary wave unit having the above-mentioned shape (such as triangle, circular arc, sinusoidal wave, rectangle, other polygons, etc.) can be arbitrarily combined and are all within the scope of protection of the present application.

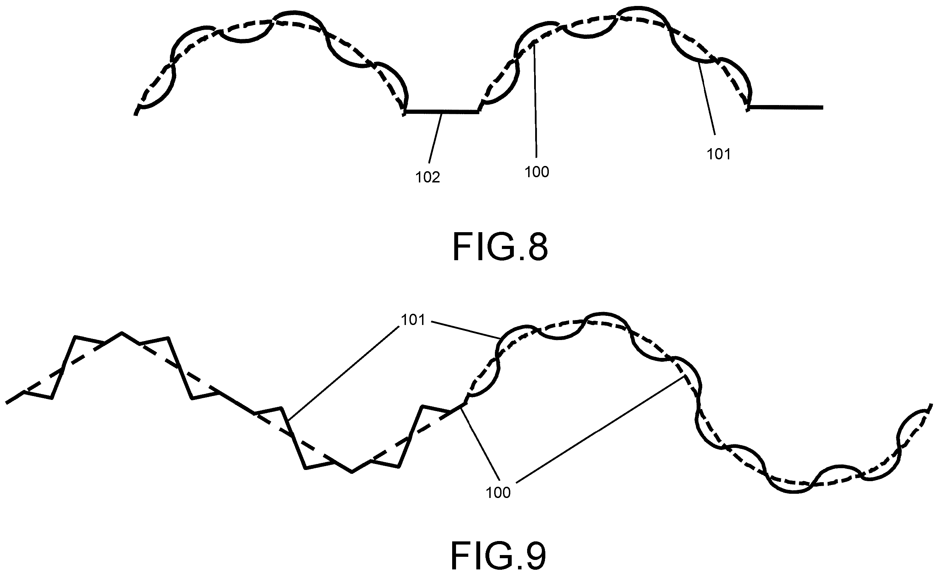

FIG. 8 is a partial schematic diagram of a wavy section of a monofilament dental tape according to another embodiment of the present application, showing two wave units of the same shape and a plurality of secondary wave units superimposed thereon. Compared with FIG. 3, the shape of the wave unit of the first wavy portion 100 in FIG. 8 becomes an arc shape, while the shape of the secondary wave unit of the second wavy portion 101 becomes a sinusoidal wave shape. In addition, a straight section 102 connects the two wave units of the first wavy portion 100 in FIG. 8.

FIG. 9 is a partial schematic diagram of a wavy section of a monofilament dental tape according to another embodiment of the present application, showing two wave units of different shapes and a plurality of secondary wave units superimposed thereon. Compared with FIG. 8, the first wavy section 100 in FIG. 9 is formed by sequentially connecting a wave unit in the shape of a triangle and a wave unit in the shape of a sinusoidal wave. The secondary wave unit superimposed on the triangular wave unit of the second wavy section 101 is in the shape of a triangle, while the secondary wave unit superimposed on the sinusoidal wave unit is in the shape of a sinusoidal wave. In addition, no straight section 102 is laid between the first wavy sections 100 in FIG. 9.

The following describes the process of a monofilament dental tape entering tooth gap based on an embodiment of the present application. When the monofilament dental tape slides on the occlusal surface of the teeth, the guide section 2 of the monofilament dental tape will be stuck in the tooth gap opening, thereby generating feedback to the object pulling the dental tape (such as a hand, a dental floss roll, or a dental floss stick). In this way, the user of the monofilament dental tape can clearly sense the position of the monofilament dental tape, and then change the direction of the force applied to the monofilament dental tape. After the direction of the force applied to the monofilament dental tape is changed from parallel to the occlusal surface of the teeth to perpendicular to the occlusal surface of the teeth, the monofilament dental tape reciprocates on the tooth gap opening under the action of the combined force, so that the dental tape body 1 extends from the tooth gap opening into the tooth gap along the width direction y. When the monofilament dental tape reciprocates in the tooth gap along the width direction y, the wavy section 10 of the dental tape body 1 contacts the surface of the tooth gap, so that food residues in the tooth gap and dental plaque on the tooth surface are squeezed into the groove formed by the first wavy portion 100 and the second wavy portion 101 of the wavy section 10, and are thus brought out of the tooth gap as the monofilament dental tape moves.

The monofilament dental tape according to the present application has the following technical effects. The dental tape body 1 of the monofilament dental tape can enhance its strength along the width direction y, so that the monofilament dental tape is not prone to splitting and cracks along the length direction x. The dental tape body 1 of the monofilament dental tape can enhance the cleaning effect of the dental tape on the tooth surface. The combination of the guide section 2 of the monofilament dental tape and the dental tape body 1 makes the sliding resistance of the monofilament dental tape during entering the tooth gap uniform and stable. In the case of a sudden change in the width of the tooth gap, the dental tape body 1 is flattened by the tension along the width direction y, so that the tension along the width direction y is absorbed, and the phenomenon of sudden release of the tension generated by the sudden change in the width of the tooth gap to damage the gums will not occur.

The present application also includes a dental floss roll made of a monofilament dental tape and a dental floss stick made of a monofilament dental tape. Such a dental floss roll and dental floss stick have the same technical effects as the monofilament dental tape.

The following describes an experiment on the cleaning effect of dental tape, including the following steps:
Step 1: Use a crayon to apply 20 times on the surface of the enamel of the flat part of the canine tooth sample to form a colored strip about 1.5 mm wide;
Step 2: Use the fingers of both hands to pull the dental tape, so that the length of the dental tape left between the fingers of both hands is about 3cm;
Step 3: Use the dental tape to scrape the surface of the enamel three times along the direction of the colored strips, using a clean area on the dental tape each time;
Step 4: Score the residual color strips, where 5 points are assigned if the color strips are completely removed and 1 point is assigned if they are not removed at all.

The above test was repeated three times for each sample of the dental tape to calculate the average value.

The following describes an experiment on the ability of the dental tape to enter and exit the tooth gap, including the following steps:
Step 1: Fix the two ends of the dental tape to the two arms of the bow-shaped tooling respectively, so that the length of the dental tape between the two fixed points is about 4 cm;
Step 2: Connect the tooling to a handheld force gauge with a range of 20N;
Step 3: Adjust the distance between the fixed anvil and the movable anvil of the micrometer screw with two round-ended anvils to 30 µm, and fix the micrometer screw on the table;
Step 4: Hold the force gauge with one hand and apply force vertically downward to the dental tape fixed on the tooling, so that the dental tape passes through the gap between the two round-ended anvils of the micrometer screw, and read the maximum force on the force gauge as the tooth gap entry force;
Step 5: Hold the force gauge with one hand and apply force vertically upward to the dental tape that has passed through the gap, so that the dental tape passes through the gap between the two round-ended anvils of the micrometer screw, and read the maximum force on the force gauge as the tooth gap exit force.

Replace the new dental tape sample and repeat the above test six times to calculate the average values of the tooth gap entry force and the tooth gap exit force.

The monofilament dental tape of the above embodiment (ie, Example 1 in the following table) was tested and compared with other dental tapes in the prior art. The results are shown in the following table.

| Experimental subjects | Cleaning ability score | Tooth gap entry force | Tooth gap exit force |
|---|---|---|---|
| Comparative Example 1 | 1.0 | 7.8 | 10.4 |
| Comparative Example 2 | 3.0 | 7.3 | 6.1 |
| Embodiment 1 | 3.7 | 5.5 | 6.0 |

In the above table, Comparative Example 1 is a commercially available product Oral B Glide Comfort Plus Floss, which is made of polytetrafluoroethylene.

Comparative Example 2 is a monofilament dental tape made of 30 wt% Hytrel^{®} 5556, 65 wt% Hytrel^{®} 4068FG and 5 wt% Multibase^{™} MB50-010. The monofilament dental tape of Comparative Example 2 has a total width of about 1600 µm, and includes guide sections and a wavy section having 7 triangular wave units in a cross section along the width direction y. The wavelength of each wave unit is about 200µm, the amplitude is about 15 µm. The height of the wavy section is about 105 µm, thickness is about 70 µm. The width of the guide sections is about 120 µm.

Embodiment 1 is the monofilament dental tape 1 according to the present application in FIG. 1.

It can be seen from the above table that the monofilament dental tape according to the present application has higher cleaning ability and lower tooth gap entry force and tooth gap exit force than commercially available products. Compared with the monofilament dental tape having only a single wavy section, the monofilament dental tape according to the present application having a second wavy section with a smaller wavelength and amplitude superimposed on the first wavy section has better cleaning ability.

The foregoing description of the embodiments has been provided for illustrative and descriptive purposes. It is not intended to be exhaustive or to limit the embodiments to the variants described. Many modifications and variations will be apparent to those skilled in the art. The embodiments are selected and described in order to best illustrate the principles and practical applications, so that those skilled in the art can understand the embodiments in their various embodiments and various modifications suitable for their intended use. Within the framework of the embodiments, the above-mentioned components and features can be combined between the different embodiments described.

## Claims

1. A monofilament dental tape (1), **characterized in that**:
the monofilament dental tape (1) has an elongate strip shape extending along a first direction, and comprises a wavy section (10) in a cross section along a second direction, the second direction being perpendicular to the first direction;
the wavy section (10) comprises a first wavy portion (100) and a second wavy portion (101);
first wavy portion (100) comprises a plurality of wave units connected in sequence;
second wavy portion (101) comprises one or more secondary wave units superimposed on each wave unit of the first wavy portion (100);
the wavelength of each wave unit of the first wavy portion (100) is greater than the wavelength of each secondary wave unit of the second wavy portion (101);
the amplitude of each wave unit of the first wavy portion (100) is greater than the amplitude of each secondary wave unit of the second wavy portion (101).

2. The monofilament dental tape according to claim 1, **characterized in that**:
the monofilament dental tape (1) comprises one or two guide sections (2);
the guide section (2) is arranged at the edge of the wavy section (10);
the guide section (2) comprises a connecting portion (21) close to the wavy section (10) and a guiding portion (22) away from the wavy section (10);
the guiding portion (22) has a smoothly extending arc surface.

3. The monofilament dental tape according to claim 2, **characterized in that**:
when the monofilament dental tape (1) is not subjected to external force, the height of the wavy section (10) is in the range of 40 to 200 µm, preferably in the range of 60 to 170 µm, more preferably in the range of 80 to 150 µm;
when the monofilament dental tape (1) is not subjected to external force, the width of the wavy section (10) is in the range of 700 to 3000 µm, preferably in the range of 700 to 2000 µm, more preferably in the range of 1000 to 2000 µm;
The width of the guide section (2) is in the range of 50 to 550 µm range.

4. The monofilament dental tape according to claim 3, **characterized in that**:
the first wavy portion (100) comprises 2 to 25 wave units, preferably 5 to 10 wave units;
the wavelength of each wave unit is in the range of 60 to 800 µm, preferably in the range of 100 to 600 µm, more preferably in the range of 150 to 500 µm;
the amplitude of each wave unit is in the range of 0 to 90 µm, preferably in the range of 2 to 50 µm, more preferably in the range of 3 to 25 µm;
the wavelength of each secondary wave unit is in the range of 20 to 600 µm, preferably in the range of 30 to 400 µm, more preferably in the range of 40 to 200 µm;
the amplitude of each secondary wave unit is in the range of 0 to 50 µm, preferably in the range of 1 to 25 µm, more preferably in the range of 2 to 15 µm;
the wavelength of each wave unit is no more than 20 times, preferably no more than 10 times, more preferably no more than 4 times, the wavelength of each secondary wave unit; and
the traveling direction of each secondary wave unit changes along the contour of the first wavy portion (100).

5. The monofilament dental tape according to claim 3, **characterized in that**:
the thickness of the wavy section (10) is uniform and is in the range of 20 to 120 µm, preferably in the range of 30 to 90 µm, more preferably in the range of 40 to 80 µm.

6. The monofilament dental tape according to claim 3, **characterized in that**:
the thickness of the wavy section (10) is not uniform;
the maximum value of the thickness of the wavy section (10) does not exceed 6 times the minimum value, preferably does not exceed 2 times;
the thickness of the wavy section (10) is in the range of 20 to 120 µm, preferably in the range of 30 to 90 µm, more preferably in the range of 40 to 80 µm.

7. The monofilament dental tape according to claim 3, **characterized in that**:
the first wavy portion (100) is composed of wave units having one or more shapes of triangles, arcs, sinusoidal waves, rectangles and other polygons connected in sequence, and has a rounded profile at the turning portion;
the second wavy portion (101) is composed of secondary wave units having one or more shapes of triangles, arcs, sinusoidal waves, rectangles and other polygons, and has a rounded profile at the turning portion.

8. The monofilament dental tape according to claim 3, **characterized in that**:
the monofilament dental tape (1) is made of polyamide thermoplastic elastomer, polyetherester thermoplastic elastomer, polyolefin thermoplastic elastomer, thermoplastic polyurethane elastomer, styrene block copolymer elastomer, polyolefin with tensile modulus lower than 1 GPa, or polybutylene succinate with tensile modulus lower than 1 GPa, preferably made of polyamide thermoplastic elastomer or polyetherester thermoplastic elastomer, more preferably made of polyetherester thermoplastic elastomer.

9. The monofilament dental tape according to claim 3, **characterized in that**:
the monofilament dental tape (1) comprises a coating applied on its surface;
the coating is made of lubricant, peeling agent, abrasive, whitening agent, active agent, olfactory stimulant, salivating agent, sensory stimulant, essential oil, fragrance, antibacterial agent or antiviral agent.

10. A dental floss roll, **characterized in that** the dental floss roll comprises a dental floss roll housing, a dental floss reel fit in the dental floss roll housing, and a monofilament dental tape (1) according to any one of claims 1 to 9 wound around the dental floss reel.

11. A dental floss stick, **characterized in that** the dental floss stick comprises a dental floss stick holder, and a monofilament dental tape (1) according to any one of claims 1 to 9 connected between different ends of the dental floss stick holder.
